# EUROPEAN PATENT APPLICATION

(11) **EP 4 714 821 A1**
(43) Date of publication of application: **25.03.2026**
(21) Application number: 25201250.5
(22) Date of filing: 09.09.2025
(51) Int. Cl.: B64C 1/36, B64C 1/38, B64G 1/58, F42B 10/46, F42B 15/34

(54) **NOSE TIP STRUCTURES FOR FLIGHT VEHICLES**

(30) Priority: 23.09.2024 US 202418893580
(71) Applicant: Raytheon Company, Tewksbury, MA 01876 (US)
(72) Inventor: HOBSON, Michael A., Tucson (US); COCANOUR, Bryan, Tucson (US); MELONIS, Daniel R., Oro Valley (US); PIERCE, Brandyn, Tucson (US); SHAYAN, Homa, Tucson (US); DAKERMANJI, John, Tucson (US); POTTER, Christopher L., Vail (US); REITH, John David, Vail (US)
(74) Representative: Crowell & Moring U.K. LLP

(57) **Abstract**

A flight vehicle may include a vehicle body and a nose tip assembly (200) coupled to the vehicle body. The nose tip assembly includes a nose body (202), a nose body cavity (206) disposed in the nose body, and a thermal feature array (210) disposed within the nose body cavity. The nose tip assembly may also include a sealing assembly configured to couple the vehicle body and the nose tip assembly. The nose tip assembly may include a nose material having a nose coefficient of thermal expansion within about 1% to about 5% of a vehicle body coefficient of thermal expansion. The nose material may also or alternatively have a nose stiffness being within about 1% to about 5% of a vehicle body stiffness.

## Description

### TECHNICAL FIELD

This disclosure relates generally to nose tip assemblies for flight vehicles. More specifically, this disclosure relates to a nose tip minimizing an aft-facing step to a downstream part.

### BACKGROUND

Flight vehicles including rockets, projectiles, unmanned aerial vehicles (UAVs), aircraft, miniature air launched decoys (MALDs), and the like may include nose tips. A nose tip may be configured to provide aerodynamic efficiency, resilience to aerothermal heating at a stagnation point, and transparency to electromagnetic radiation (EMR) in one or more wavelengths, such as in the visible, infrared (IR), ultraviolet (UV), and/or millimeter wave (MMW) bands. However, the nose tip interface may cause aerodynamic inefficiencies that augment heating of components behind the interface.

### SUMMARY

This disclosure relates to a nose tip minimizing an aft-facing step to a downstream part.

In some examples, a nose tip assembly may include a nose body, a nose body cavity disposed in the nose body, and a thermal feature array disposed within the nose body cavity.

Any single one or any combination of the following features may be used with the examples above. The thermal feature array may include a pin array extending inward from an outer surface of the nose body. The thermal feature array may include a fin array extending inward from an outer surface of the nose body and having a length parallel to a central axis of the nose body. The thermal feature array may include a rib array extending inward from an outer surface of the nose body and having a length substantially perpendicular to a central axis of the nose body. The nose tip assembly may further include a central protrusion disposed in the nose body cavity. The nose body may include a nose angled lip disposed at an outer edge of the thermal feature array. The nose angled lip may be configured to be coupled to a vehicle body.

In other examples, a flight vehicle may include a vehicle body and a nose tip assembly coupled to the vehicle body. The nose tip assembly may include a nose body, a nose body cavity disposed in the nose body, and a thermal feature array disposed within the nose body cavity.

Any single one or any combination of the following features may be used with the examples above. The nose body may include a nose material having a nose coefficient of thermal expansion. The vehicle body may include a vehicle material having a vehicle coefficient of thermal expansion. The nose coefficient of thermal expansion may be within about 1% to about 5% of the vehicle coefficient of thermal expansion. The nose body may include a nose material having a nose stiffness. The vehicle body may include a vehicle material having a vehicle stiffness. The nose stiffness may be within about 1% to about 5% of the vehicle stiffness. The nose body may include a nose angled lip disposed at an outer edge of the thermal feature array. The vehicle body may include a vehicle angled lip disposed at an outer edge of the vehicle body. The nose angled lip may be configured to couple to the vehicle angled lip. The thermal feature array may include a pin array extending inward from an outer surface of the nose body. The thermal feature array may include a fin array extending inward from an outer surface of the nose body and having a length parallel to a central axis of the nose body. The thermal feature array may include a rib array extending inward from an outer surface of the nose body and having a length substantially perpendicular to a central axis of the nose body.

In still other examples, a flight vehicle may include a vehicle body and a nose tip assembly coupled to the vehicle body. The nose tip assembly may include a nose body, a nose body cavity disposed in the nose body, a thermal feature array disposed within the nose body cavity, and a sealing assembly configured to couple the vehicle body and the nose tip assembly.

Any single one or any combination of the following features may be used with the examples above. The sealing assembly may include a seal material disposed between the nose body and the vehicle body. The sealing assembly may include a seal contacting an inner surface of a vehicle angled lip opposite the seal material. The thermal feature array may include a pin array extending inward from an outer surface of the nose body. The thermal feature array may include a fin array extending inward from an outer surface of the nose body and having a length parallel to a central axis of the nose body. The thermal feature array may include a rib array extending inward from an outer surface of the nose body and having a length substantially perpendicular to a central axis of the nose body.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1A illustrates a side view of an example flight vehicle;
FIGURE 1B illustrates a side view of a portion of the example flight vehicle of FIGURE 1A;
FIGURE 1C illustrates a perspective view of the example flight vehicle of FIGURE 1A;
FIGURE 2A illustrates a perspective cross-sectional view of an example nose tip assembly in accordance with this disclosure;
FIGURE 2B illustrates an exploded view of an example nose tip assembly in accordance with this disclosure;
FIGURE 3A illustrates a cross-sectional view of an example nose tip assembly in accordance with this disclosure; and
FIGURE 3B illustrates another cross-sectional view of an example nose tip assembly in accordance with this disclosure.

### DETAILED DESCRIPTION

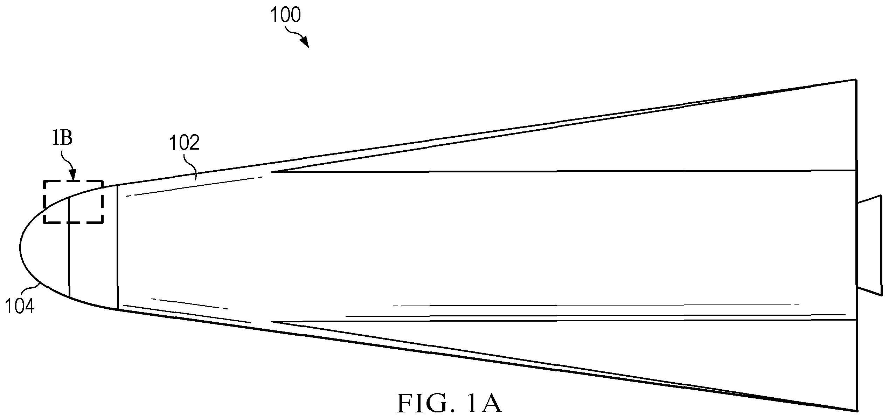

FIGURES 1A through 3B, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As noted above, flight vehicles including rockets, projectiles, space launch system vehicles, unmanned aerial vehicles (UAVs), aircraft, miniature air launched decoys (MALDs), small diameter munitions, and the like may include nose tips. A nose tip may be configured to provide aerodynamic efficiency, resilience to aerothermal heating at a stagnation point, and transparency to electromagnetic radiation (EMR) in one or more wavelengths, such as in the visible, infrared (IR), ultraviolet (UV), and/or millimeter wave (MMW) bands. However, the nose tip interface may cause aerodynamic inefficiencies that augment heating of components behind the interface.

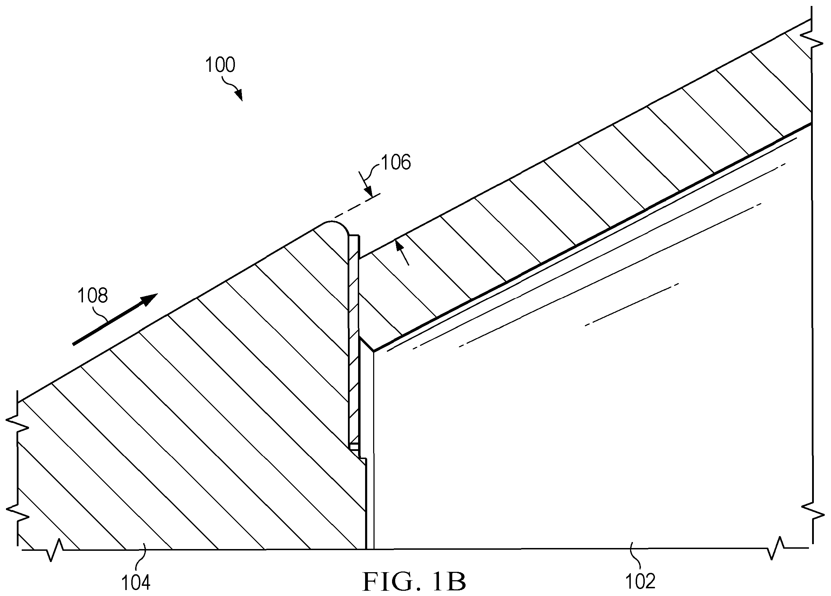

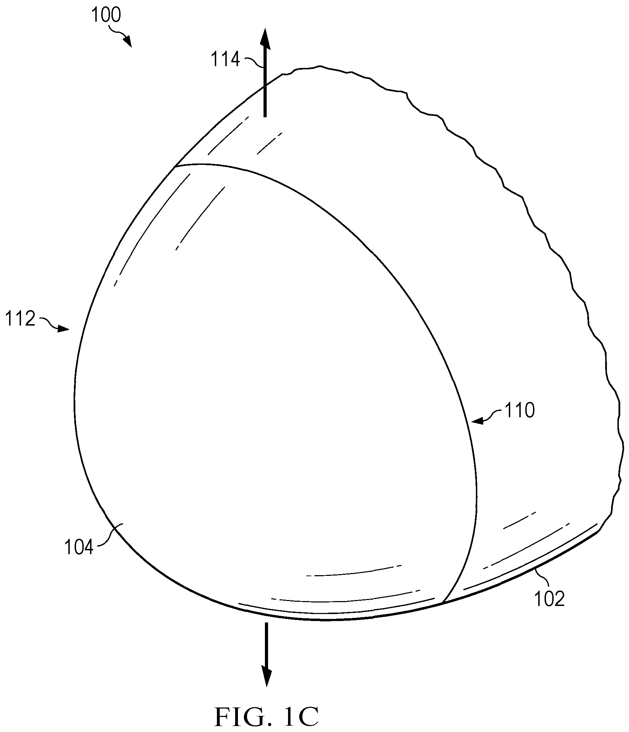

FIGURE 1A illustrates a side view of an example flight vehicle 100, FIGURE 1B illustrates a side view of a portion of the example flight vehicle 100 of FIGURE 1A, and FIGURE 1C illustrates a perspective view of the example flight vehicle 100 of FIGURE 1A. The flight vehicle 100 may represent any suitable structure configured to move through the atmosphere, such as a missile, rocket, launched projectile, UAV, aircraft, MALD.

As shown in FIGURES 1A through 1C, the flight vehicle 100 includes a vehicle body 102 coupled to a nose tip 104. As can be seen in FIGURE 1B, an aft-facing step 106 is produced between the nose tip 104 and the vehicle body 102. When the flight vehicle 100 is in operation, such as in flight through the atmosphere, the flight vehicle 100 encounters a fluid flow 108 over the aft-facing step 106 between the nose tip 104 and onto the vehicle body 102. The fluid flow 108 has a laminar flow over the nose tip 104 until the fluid flow 108 reaches the aft-facing step 106. At this point, the aft-facing step 106 turns turbulent.

The boundary layer transition from laminar flow to turbulent flow at the nose tip 104 is sensitive to the size of the aft-facing step 106. This means a larger aft-facing step 106 causes augmented heating to downstream parts like the vehicle body 102. The turbulence of the fluid flow 108 impacts the vehicle body 102 and causes increased heating, which may damage the flight vehicle 100 or one or more components disposed therein.

As shown in FIGURE 1C, during operation of the flight vehicle 100, the fluid flow 108 creates a hot side 110 and a cold side 112 on the nose tip 104. Due to material properties of the nose tip 104, the nose tip 104 at the hot side 110 expands, and the nose tip 104 at the cold side 112 contracts. This creates an outward deformation 114 between the hot side 110 and the cold side 112. The outward deformation 114 can increase the aft-facing step 106, further exacerbating the turbulence of the fluid flow 108 after the aft-facing step 106.

This disclosure provides for the use of nose tip assemblies that reduce undesired heating on the vehicle body. For example, embodiments of this disclosure can include the use of thermal feature arrays. During operation, a nose tip assembly can use a thermal feature array to dissipate heat from a nose body. For instance, the thermal feature array may include a pin array configured to reduce heat from the nose body, reducing the aft-facing step created during operation of the flight vehicle. As a result, these techniques can reduce or avoid damage to components within flight vehicles.

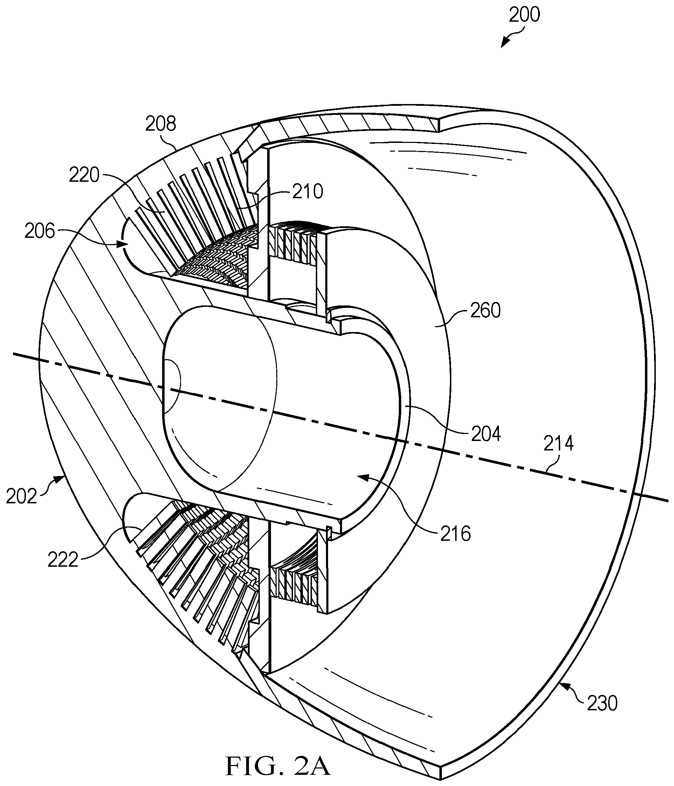

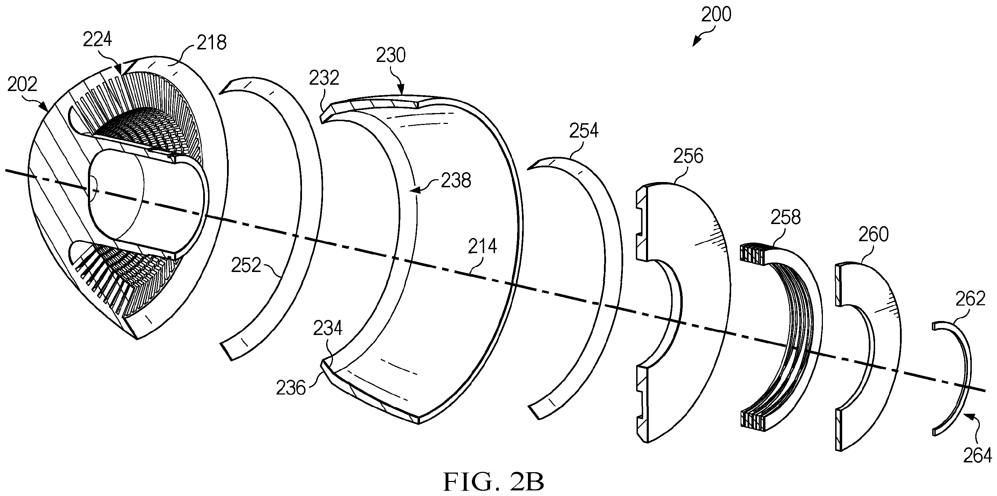

FIGURE 2A illustrates a perspective cross-sectional view of an example nose tip assembly 200 in accordance with this disclosure, and FIGURE 2B illustrates an exploded view of the example nose tip assembly 200 of FIGURE 2A in accordance with this disclosure. For ease of explanation, the nose tip assembly 200 may be used with the flight vehicle 100 described above. However, the nose tip assembly 200 may be used with any other suitable flight vehicle.

As shown in FIGURES 2A and 2B, the nose tip assembly 200 includes a nose body 202, a central protrusion 204 extending from the nose body 202, a nose body cavity 206 disposed between an outer surface 208 of the nose body 202 and the central protrusion 204, and a thermal feature array 210 disposed within the nose body cavity 206. As can be seen here, the thermal feature array 210 includes a pin array 220 having pins 222 extending inward towards the central protrusion 204 and radially about a central axis 214 of the nose body 202. The central protrusion 204 includes a central protrusion cavity 216. The nose body 202 may include an angled lip disposed at an outer edge 224 of the thermal feature array 210. The angled lip can be configured to be coupled to a vehicle body 230. The thermal feature array 210 may be tunable, such as when the thermal feature array 210 can be designed for a specific rate of heat transfer. The thermal feature array 210 can also control the temperature of the interface of the aft of the nose body 202 and the vehicle body 230 while allowing deformation.

The nose body 202 can be formed from a nose material having a nose coefficient of thermal expansion, and the vehicle body 230 can be formed from a vehicle material having a vehicle coefficient of thermal expansion. The nose material and the vehicle material can represent different materials. In some cases, the nose coefficient of thermal expansion can be within about 1% to about 20% of the vehicle coefficient of thermal expansion, such as within about 1% to about 5% of the vehicle coefficient of thermal expansion. The approximate match between the coefficient of thermal expansion of the nose body 202 and the coefficient of thermal expansion of the vehicle body 230 allows for the nose body 202 and the vehicle body 230 to expand to similar degrees when they are heated, such as by the fluid flow 108, during operation. The similar thermal expansion of the nose body 202 and the vehicle body 230 can reduce or prevent an aft-facing step from being created, thus reducing undesired heating and damage to the vehicle body 230 or internal components within the flight vehicle 100.

Also, or alternatively, the nose body 202 can include a nose material having a nose stiffness, and the vehicle body 230 can include a vehicle material having a vehicle stiffness. Again, the nose material and the vehicle material can represent different materials. In some cases, the nose stiffness can be within about 1% to about 20% of the vehicle stiffness, such as within about 1% to about 5% of the vehicle stiffness. In other cases, the nose body cavity 206 may be configured such that the nose body 202 includes a thickness adjacent to the vehicle body 230 that is sufficiently thin to increase flexibility of the nose body 202 in this region. Like the coefficient of thermal expansion match, the increased flexibility of the nose body 202, either through an approximate match between the stiffness of the nose body 202 and the stiffness of the vehicle body 230 or a reduced thickness of the nose body 202 near the vehicle body 230, allows for the nose body 202 and the vehicle body 230 to deform locally with the vehicle body 230 to reduce or minimize stress across a joint between the nose body 202 and the vehicle body 230 caused by the fluid flow 108 during operation. This local deformation can again reduce or prevent an aft-facing step from being created, thus reducing undesired heating and damage to internal components within the flight vehicle 100.

In some cases, the nose body 202 can include a nose angled lip 218 disposed at an outer edge 224 of the thermal feature array 210. Also, in some cases, the vehicle body 230 can include a vehicle angled lip 232 disposed at an outer edge 234 of the vehicle body 230. The nose angled lip 218 can be configured to couple to the vehicle angled lip 232. The angled nature of the nose angled lip 218 and the vehicle angled lip 232 may allow for reduced deformation during operation and allow for attachment of the nose body 202 to the vehicle body 230 using a brazed, mechanical, or other suitable connection. This can also help to reduce or minimize an off-centering contributor to an aft-facing step.

As shown in FIGURE 2B, an optional sealing assembly 250 may include a seal material 252 disposed between the nose body 202 and the vehicle body 230. For example, the seal material 252 may be disposed between the nose angled lip 218 and an outer surface 236 of the vehicle angled lip 232. In some cases, the seal material 252 may include a braze material, such as when the nose angled lip 218 and the outer surface 236 of the vehicle angled lip 232 undergo a brazing process so that a filler material joins the nose body 202 and the vehicle body 230. The sealing assembly 250 may also include a seal 254 contacting an inner surface 238 of the vehicle angled lip 232 opposite the seal material 252. The sealing assembly 250 may further include a plug 256, a spring 258, a washer 260, and a snap ring 262. For example, the plug 256 may contact the seal 254. Subsequently, the spring 258 may exert a spring force onto the plug 256, thereby applying a sealing pressure to the seal 254. The washer 260 allows for the spring 258 to be compressed, which allows the spring 258 to maintain the spring force on the plug 256. The snap ring 262 may secure the sealing assembly 250 to prevent the spring 258 from displacing the washer 260. In addition, the sealing assembly 250 may include a sealing central aperture 264 to accommodate for the central protrusion 204 of the nose body 202.

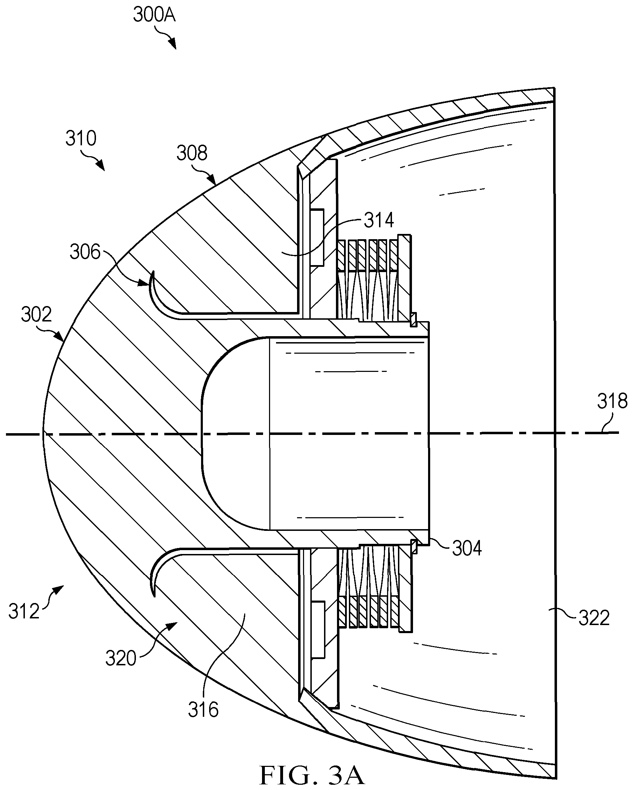

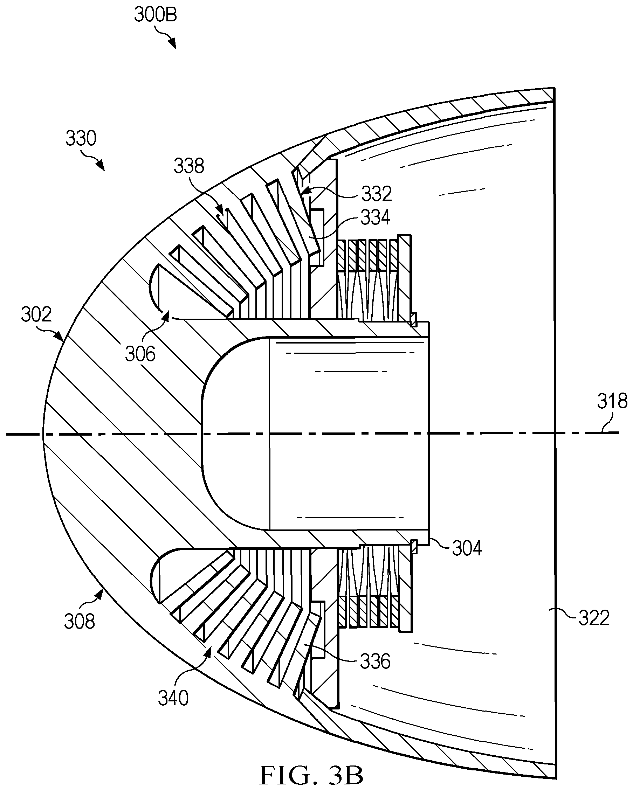

FIGURE 3A illustrates a cross-sectional view of an example nose tip assembly 310 of a flight vehicle 300A in accordance with this disclosure, and FIGURE 3B illustrates another cross-sectional view of an example nose tip assembly 330 of a flight vehicle 300B in accordance with this disclosure. Each of the nose tip assemblies 310, 330 may represent a particular implementation of the nose tip assembly 200 described above. As shown in FIGURES 3A and 3B, the flight vehicle 300A and the flight vehicle 300B are configured similarly to the flight vehicle 100.

As shown in FIGURE 3A, the nose tip assembly 310 includes a nose body 302 having a nose body cavity 306 between a central protrusion 304 and an outer surface 308 of the nose body 302. In other cases, the nose tip assembly 310 may include a nose body 302 without a central protrusion 304. In such embodiments, the nose body cavity 306 is disposed within the nose body 302. As shown in FIGURE 3A, the nose tip assembly 310 also includes a thermal feature array 312 having a fin array 314 extending towards the central protrusion 304 and having a length 316 parallel to a central axis 318 of the central protrusion 304. The fin array 314 includes at least one fin 320 having the length 316 that extends coaxially with the central axis for a majority, but not all, of a depth of the nose body cavity 306. Additionally, the fin array 314 includes gaps (not shown) between each of the at least one fin 320. These gaps, along with the length 316 configured to be less than the depth of the nose body cavity 306, allows for efficient heat absorption through the fin array 314, allowing the thermal feature array 312 to act as a heat sink for the nose body 302 without increasing its stiffness such that the thermal growth of the nose tip assembly 310 is reduced. This can reduce or prevent a size increase of the nose tip assembly 310, particularly the outer surface 308 of the nose body 302, and reduce or prevent any aft-facing step that occurs between the nose body 302 and the vehicle body 322.

Similarly, as shown in FIGURE 3B, the nose tip assembly 330 includes a nose body 302 having a nose body cavity 306 between a central protrusion 304 and an outer surface 308 of the nose body 302. As noted regarding the nose tip assembly 302 in FIGURE 3B, the nose tip assembly 330 may include a nose body 302 without the central protrusion 304. In such embodiments, the nose body cavity 306 is disposed within the nose body 302. As shown in FIGURE 3B, the nose tip assembly 330 also includes a thermal feature array 332 having a rib array 334 extending towards the central protrusion 304 and having at least one rib 340 including a length 336 substantially perpendicular to a central axis 318 of the central protrusion 304. For example, in some cases, the length 336 may be at a 90° angle from the central axis 318. In other cases, the length 336 may be at an angle less than or greater than 90°, such as when the rib array 334 includes a swirl-like pattern. Additionally, the rib array 334 includes gaps 338 between each of the at least one rib 340. The gaps 338 allow for efficient heat absorption through the rib array 334, allowing the thermal feature array 332 to act as a heat sink for the nose body 302 without increasing its stiffness. This can reduce or prevent the thermal growth of the nose tip assembly 330, particularly of the outer surface 308 of the nose body 302, and reduce or prevent any aft-facing step that occurs between the nose body 302 and the vehicle body 322.

Although FIGURES 2A through 3B illustrate examples of nose tip assemblies, various changes may be made to FIGURES 2A through 3B. For example, each of the nose tip assemblies and their individual components may have any suitable size, shape, and dimensions. Also, each of the nose tip assemblies and their individual components may be formed using any suitable material(s) and in any suitable manner.

It may be advantageous to set forth definitions of certain words and phrases used throughout this patent document. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

Aspects of the disclosure are set out in the following numbered clauses:
Clause 1. A nose tip assembly comprising:
   a nose body;
   a nose body cavity disposed in the nose body; and
   a thermal feature array disposed within the nose body cavity.
Clause 2. The nose tip assembly of Clause 1, wherein the thermal feature array comprises a pin array extending inward from an outer surface of the nose body.
Clause 3. The nose tip assembly of Clause 1, wherein the thermal feature array comprises a fin array extending towards the central protrusion and having a length parallel to a central axis of the nose body.
Clause 4. The nose tip assembly of Clause 1, wherein the thermal feature array comprises a rib array extending inward from an outer surface of the nose body and having a length substantially perpendicular to a central axis of the nose body.
Clause 5. The nose tip assembly of Clause 1, further comprising a central protrusion disposed in the nose body cavity.
Clause 6. The nose tip assembly of Clause 1, wherein the nose body comprises a nose angled lip disposed at an outer edge of the thermal feature array.
Clause 7. The nose tip assembly of Clause 6, wherein the nose angled lip is configured to be coupled to a vehicle body.
Clause 8. The nose tip assembly of Clause 1, wherein the thermal feature array regulates a temperature of an interface between the nose tip assembly and a vehicle body to reduce a differential thermal growth contributor to an aft-facing step between the nose body and the vehicle body.
Clause 9. A flight vehicle comprising:
   a vehicle body; and
   a nose tip assembly coupled to the vehicle body, the nose tip assembly comprising:
      a nose body;
      a nose body cavity disposed in the nose body; and
      a thermal feature array disposed within the nose body cavity.
Clause 10. The flight vehicle of Clause 9, wherein:
   the nose body comprises a nose material having a nose coefficient of thermal expansion;
   the vehicle body comprises a vehicle material having a vehicle coefficient of thermal expansion; and
   the nose coefficient of thermal expansion is within about 1% to about 5% of the vehicle coefficient of thermal expansion.
Clause 11. The flight vehicle of Clause 9, wherein:
   the nose body comprises a nose material having a nose stiffness;
   the vehicle body comprises a vehicle material having a vehicle stiffness; and
   the nose stiffness is within about 1% to about 5% of the vehicle stiffness.
Clause 12. The flight vehicle of Clause 9, wherein:
   the nose body comprises a nose angled lip disposed at an outer edge of the thermal feature array;
   the vehicle body comprises a vehicle angled lip disposed at an outer edge of the vehicle body; and
   the nose angled lip is configured to couple to the vehicle angled lip.
Clause 13. The flight vehicle of Clause 9, wherein the thermal feature array comprises a pin array extending inward from an outer surface of the nose body.
Clause 14. The flight vehicle of Clause 9, wherein the thermal feature array comprises a fin array extending inward from an outer surface of the nose body and having a length parallel to a central axis of the nose body.
Clause 15. The flight vehicle of Clause 9, wherein the thermal feature array comprises a rib array extending inward from an outer surface of the nose body and having a length substantially perpendicular to a central axis of the nose body.
Clause 16. A flight vehicle comprising:
   a vehicle body;
   a nose tip assembly coupled to the vehicle body, the nose tip assembly comprising:
      a nose body;
      a central protrusion extending from the nose body;
      a nose body cavity disposed between an outer surface of the nose body and the central protrusion; and
      a thermal feature array disposed within the nose body cavity; and a sealing assembly configured to couple the vehicle body and the nose tip assembly.
Clause 17. The flight vehicle of Clause 16, wherein the sealing assembly comprises a seal material disposed between the nose body and the vehicle body.
Clause 18. The flight vehicle of Clause 17, wherein the sealing assembly comprises a seal contacting an inner surface of a vehicle angled lip opposite the seal material.
Clause 19. The flight vehicle of Clause 16, wherein the thermal feature array comprises a pin array extending inward towards the central protrusion.
Clause 20. The flight vehicle of Clause 16, wherein the thermal feature array comprises one of a fin array extending towards the central protrusion and having a length parallel to a central axis of the central protrusion, or a rib array extending towards the central protrusion and having a length substantially perpendicular to a central axis of the central protrusion.

## Claims

1. A nose tip assembly comprising:
a nose body;
a nose body cavity disposed in the nose body; and
a thermal feature array disposed within the nose body cavity.

2. The nose tip assembly of Claim 1, wherein the thermal feature array comprises a pin array extending inward from an outer surface of the nose body.

3. The nose tip assembly of Claim 1, further comprising a central protrusion disposed in the nose body cavity, wherein the thermal feature array comprises a fin array extending towards the central protrusion and having a length parallel to a central axis of the nose body.

4. The nose tip assembly of Claim 1, wherein the thermal feature array comprises a rib array extending inward from an outer surface of the nose body and having a length substantially perpendicular to a central axis of the nose body.

5. The nose tip assembly of any one of Claims 1, 2 or 4, further comprising a central protrusion disposed in the nose body cavity.

6. The nose tip assembly of any preceding Claim, wherein the nose body comprises a nose angled lip disposed at an outer edge of the thermal feature array.

7. The nose tip assembly of Claim 6, wherein the nose angled lip is configured to be coupled to a vehicle body.

8. The nose tip assembly of any preceding Claim, wherein the thermal feature array regulates a temperature of an interface between the nose tip assembly and a vehicle body to reduce a differential thermal growth contributor to an aft-facing step between the nose body and the vehicle body.

9. A flight vehicle comprising:
a vehicle body; and
a nose tip assembly of any one of claims 1 to 8 coupled to the vehicle body.

10. The flight vehicle of Claim 9, wherein:
the nose body comprises a nose material having a nose coefficient of thermal expansion;
the vehicle body comprises a vehicle material having a vehicle coefficient of thermal expansion; and
the nose coefficient of thermal expansion is within about 1% to about 5% of the vehicle coefficient of thermal expansion.

11. The flight vehicle of Claim 9 or Claim 10, wherein:
the nose body comprises a nose material having a nose stiffness;
the vehicle body comprises a vehicle material having a vehicle stiffness; and
the nose stiffness is within about 1% to about 5% of the vehicle stiffness.

12. The flight vehicle of any one of Claims 9 to 11, wherein:
the nose body comprises a nose angled lip disposed at an outer edge of the thermal feature array;
the vehicle body comprises a vehicle angled lip disposed at an outer edge of the vehicle body; and
the nose angled lip is configured to couple to the vehicle angled lip.

13. The flight vehicle of any one of claims 9 to 12, further comprising a sealing assembly configured to couple the vehicle body and the nose tip assembly.

14. The flight vehicle of Claim 13, wherein the sealing assembly comprises a seal material disposed between the nose body and the vehicle body.

15. The flight vehicle of Claim 13, wherein the sealing assembly comprises a seal contacting an inner surface of a vehicle angled lip opposite the seal material.
